# EUROPÄISCHE PATENTSCHRIFT

(11) **EP 1 608 884 B1**
(45) Veröffentlichungstag und Bekanntmachung des Hinweises auf die Patenterteilung: **19.09.2007**
(21) Anmeldenummer: 04722180.9
(22) Anmeldetag: 20.03.2004
(51) Int. Cl.: F16D 33/00

(54) **HYDRODYNAMISCHER WANDLER MIT PRIMÄR- UND WANDLERÜBERBRÜCKUNGSKUPPLUNG**
HYDRODYNAMIC CONVERTER PROVIDED WITH A PRIMARY CLUTCH AND A BY-PASS CLUTCH FOR SAID CONVERTER
CONVERTISSEUR HYDRODYNAMIQUE AVEC EMBRAYAGE PRIMAIRE ET EMBRAYAGE DE PONTAGE DE CONVERTISSEUR

(30) Priorität: 28.03.2003 DE 10314338
(43) Veröffentlichungstag der Anmeldung: 28.12.2005
(73) Patentinhaber: ZF FRIEDRICHSHAFEN AG, 88038 Friedrichshafen (DE)
(72) Erfinder: LEBER, Fritz, 88048 Friedrichshafen (DE)
(86) Internationale Anmeldenummer: PCT/EP2004/002942
(87) Internationale Veröffentlichungsnummer: WO 2004/085867

(56) Entgegenhaltungen:
- EP-A- 0 308 072
- DE-A- 19 521 458
- US-A- 5 400 884

## Beschreibung

Die vorliegende Erfindung betrifft einen hydrodynamischen Wandler mit Primär- und Wandlerüberbrückungskupplung für den Antriebsstrang eines Kraftfahrzeugs, insbesondere einer Arbeitsmaschine wie beispielsweise eines Radladers, eines Staplers oder eines Dumpers gemäß dem Oberbegriff des Patentanspruchs 1. Ferner betrifft die Erfindung ein Verfahren zum Steuern und/oder Regeln der Primär- und Wandlerüberbrückungskupplung des erfindungsgemäßen hydrodynamischen Wandlers.

Hydrodynamische Wandler sind seit der Einführung automatischer Getriebe das Bindeglied zwischen einer Antriebsmaschine und dem eigentlichen Getriebe. Ein Wandler ermöglicht zum einen durch den Schlupf ein komfortables ruckfreies Anfahren und dämpft gleichzeitig Drehungleichförmigkeiten des Verbrennungsmotors. Zum anderen stellt die prinzipbedingte Momentüberhöhung ein großes Anfahrmoment zur Verfügung.

Ein hydrodynamischer Wandler besteht nach dem Stand der Technik aus einem Pumpenrad, einem Turbinenrad, dem Reaktionsglied (Leitrad, Stator) und dem zur Drehmomentübertragung notwendigen Öl.

Das Pumpenrad, welches durch den Motor angetrieben wird, versetzt das Öl im Wandler in eine kreisförmige Strömung. Diese Ölströmung trifft auf das Turbinenrad und wird dort in der Strömungsrichtung umgelenkt.

Im Nabenbereich verläßt das Öl die Turbine und gelangt auf das Reaktionsglied (Leitrad), wo es erneut umgelenkt und somit in der passenden Anströmrichtung dem Pumpenrad zugeführt wird.

Durch die Umkehr entsteht am Leitrad ein Moment, dessen Reaktionsmoment das Turbinenmoment erhöht. Das Verhältnis Turbinenmoment zu Pumpenmoment wird als Momenterhöhung bezeichnet. Je größer der Drehzahlunterschied zwischen Pumpe und Turbine ist, desto größer ist die Momenterhöhung, welche bei stehender Turbine die maximale Größe hat. Mit zunehmender Turbinendrehzahl sinkt folglich die Momenterhöhung ab. Erreicht die Turbinendrehzahl ca. 85% der Pumpendrehzahl, wird die Momenterhöhung=1, d.h. das Turbinenmoment ist gleich dem Pumpenmoment.

Das Leitrad, das sich über den Freilauf und die Leitradwelle zum Getriebegehäuse abstützt, läuft in diesem Zustand frei in der Strömung mit und der Freilauf wird überrollt. Von diesem Punkt an arbeitet der Wandler als reine Strömungskupplung. Während der Wandlung steht das Leitrad still und wird über den Freilauf zum Gehäuse abgestützt.

Aus dem Stand der Technik sind Wandler bekannt, welche eine Wandlerüberbrückungskupplung und eine Primärkupplung umfassen, wobei die Primärkupplung (PK) zwischen Motor und Wandler und die Wandlerüberbrückungskupplung zwischen Motor und Getriebe geschaltet ist.

Derartige Wandler sind üblicherweise für Fahrzeuge vorgesehen, die Arbeiten bei sehr niedrigen Geschwindigkeiten verrichten, aber auch mit hohen Geschwindigkeiten fahren können. Beispielsweise ist im Rahmen der DE 195 21 458 A1 ein Wandler mit Wandlerüberbrückungskupplung und Primärkupplung beschrieben. Nach dem Stand der Technik ist für Wandlerüberbrückungskupplung und Primärkupplung jeweils eine eigene Druckzuführung und eine eigene Ventileinheit vorgesehen.

Der vorliegenden Erfindung liegt die Aufgabe zugrunde, einen hydrodynamischen Wandler zu schaffen, der eine Wandlerüberbrückungskupplung und eine Primärkupplung umfasst, der kompakt ausgeführt ist und eine geringe Anzahl von Bauteilen aufweist. Des weiteren soll ein Verfahren zum Steuern und/oder Regeln der Primär- und Wandlerüberbrückungskupplung des erfindungsgemäßen hydrodynamischen Wandlers vorgeschlagen werden.

Diese Aufgabe wird für einen hydrodynamischen Wandler durch die Merkmale des Patentanspruchs 1 gelöst. Ein Verfahren zum Steuern und/oder Regeln der Primär- und Wandlerüberbrückungskupplung ist Gegenstand des Patentanspruchs 13. Weitere Vorteile und Ausgestaltungen gehen aus den Unteransprüchen hervor.

Demnach wird vorgeschlagen, die Wandlerüberbrückungskupplung und die Primärkupplung im Wandler derart anzuordnen, dass beide Kupplungen durch einen gemeinsamen Kolben beaufschlagt bzw. betätigt werden. Wandlerüberbrückungskupplung und Primärkupplung sind bevorzugterweise als Lamellenkupplungen ausgeführt.

Gemäß der Erfindung ist der gemeinsame Kolben derart angeordnet, dass er von der einen Seite von dem Wandlerinnendruck und von der anderen Seite vom im Kolbenraum aufgebauten Druck beaufschlagt wird, so dass in Abhängigkeit von dem Verhältnis Wandlerinnendruck zu Kolbenraumdruck, der Kolben in eine bestimmte Richtung bewegt wird, wobei in Abhängigkeit von der Richtung jeweils eine Kupplung betätigt wird.

Erfindungsgemäß ist vorzugsweise vorgesehen, dass beide Kupplungen an derselben Seite des Wandlers angeordnet sind, bevorzugter Weise motorseitig. Als besonders vorteilhaft erweist sich hierbei eine Anordnung, wonach die Kupplungen übereinander oder nebeneinander angeordnet sind.

Zur Ansteuerung der Kupplungen ist erfindungsgemäß eine gemeinsame Ventileinheit vorgesehen, die einen Druck zwischen Null bar und Systemdruck ausgibt bzw. regelt, wobei im Druckbereich Null bar bis Wandlerdruck die Übertragungsfähigkeit der Primärkupplung gesteuert bzw. geregelt wird, während im Druckbereich Wandlerdruck bis Systemdruck die Übertragungsfähigkeit der Wandlerüberbrückungskupplung gesteuert bzw. geregelt wird.

Die Erfindung wird im folgenden anhand der beigefügten Figuren beispielhaft näher erläutert. Es zeigen:
Figur 1: Eine erste Ausführungsform der vorliegenden Erfindung, bei der die Wandlerüberbrückungskupplung und die Primärkupplung übereinander angeordnet sind;
Figur 2: Eine zweite Ausführungsform der vorliegenden Erfindung, bei der die Wandlerüberbrückungskupplung und die Primärkupplung übereinander angeordnet sind;
Figur 3: Eine dritte Ausführungsform der vorliegenden Erfindung, bei der die Wandlerüberbrückungskupplung und die Primärkupplung übereinander angeordnet sind;
Figur 4: Eine vierte Ausführungsform der vorliegenden Erfindung, bei der die Wandlerüberbrückungskupplung und die Primärkupplung nebeneinander angeordnet sind; und
Figur 5: Eine weitere Ausführungsform der vorliegenden Erfindung, bei der die Wandlerüberbrückungskupplung und die Primärkupplung nebeneinander angeordnet sind.

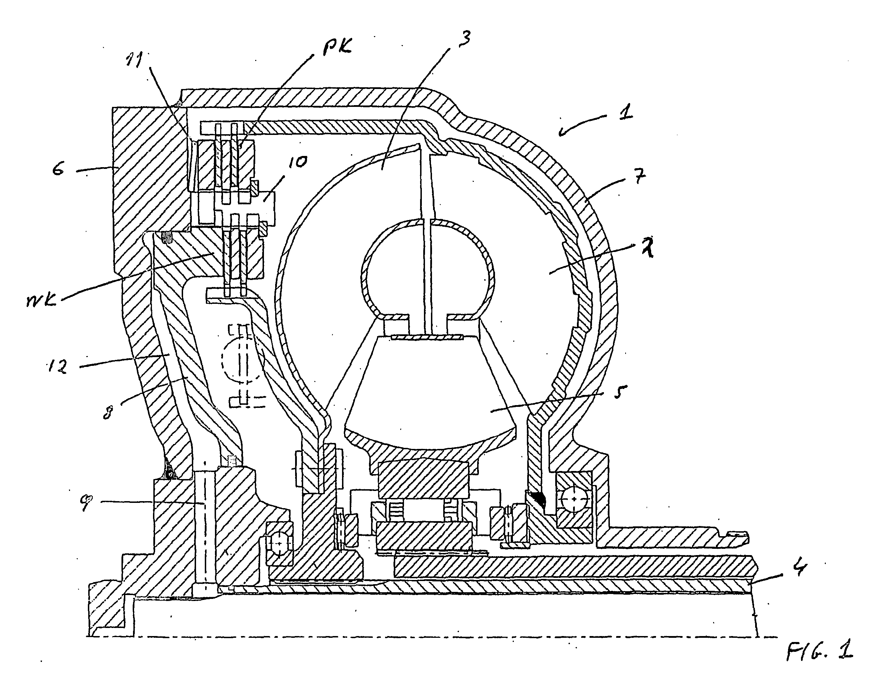

In Figur 1 ist ein hydrodynamischer Wandler 1 gezeigt, umfassend eine Pumpe 2, eine Turbine 3, welche mit der Getriebeeingangswelle 4 verbunden ist, und einen Stator 5. Ferner sind der Antrieb 6 des Motors sowie die Wandlerschale 7 gezeigt. Der Wandler 1 umfasst eine Primärkupplung PK, welche den Antrieb 6 mit der Pumpe 2 lösbar verbindet und eine Wandlerüberbrückungskupplung WK, welche den Antrieb 6 mit dem Getriebe bzw. der Getriebeeingangswelle 4 lösbar verbindet.

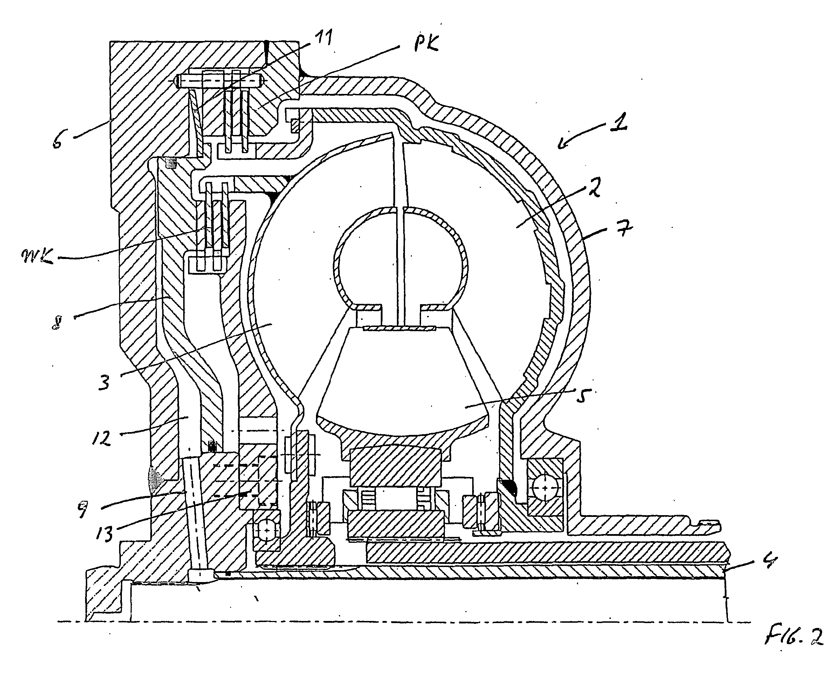

Gemäß der Erfindung sind die Primärkupplung PK und die Wandlerüberbrückungskupplung WK in etwa übereinander angeordnet und werden durch einen gemeinsamen Kolben 8 über eine gemeinsame Ölzuführung 9 betätigt. Diese Bezeichnungen gelten auch für die Figuren 2, 3, 4 und 5.

Hierbei ist die Pumpe 2 (Pumpenrad) mit dem Außenlamellenträger der Primärkupplung verbunden oder einstückig ausgeführt. Der Innenlamellenträger der Primärkupplung PK ist mit einem mit dem Antrieb 6 verbundenen Steg 10 verbunden oder einstückig ausgeführt. Die Turbine 3 ist mit dem Innenlamellenträger der Wandlerüberbrückungskupplung WK verbunden; ferner ist der Antrieb 6 über den selben Steg 10 mit dem Außenlamellenträger der Wandlerüberbrückungskupplung verbunden.

Die Wandlerüberbrückungskupplung WIC ist gemäß der Erfindung als "Positiv-Kupplung" ausgeführt, d.h. sie wird unter Druckbeaufschlagung geschlossen. Dahingegen ist für das in Figur 1 gezeigte Ausführungsbeispiel die Primärkupplung als "Negativ-Kupplung" ausgeführt, d.h. die Primärkupplung wird mittels der Federkraft der Feder 11 geschlossen und unter Druckbeaufschlagung geöffnet.

Die Wirkungsweise der beiden Kupplungen ist wie folgt:

Wenn der Kolbenraum 12 mit Druck beaufschlagt wird, der über dem Wandlerdruck liegt, dann drückt der Kolben 8 auf das Lamellenpaket der Wandlerüberbrückungskupplung und die Wandlerüberbrückungskupplung schließt.

Wenn der Druck im Kolbenraum 12 unter den Wandlerdruck abgesenkt wird, dann wird der Kolben 8 vom Wandlerdruck in Richtung Kolbenraum 12 gedrückt, wobei das Lamellenpaket der Primärkupplung, welches zuvor von der Feder 11 zusammengedrückt war, entlastet wird, so dass die Primärkupplung öffnet.

In Figur 2 ist ein weiteres Ausführungsbeispiel eines erfindungsgemäßen Wandlers gezeigt. Auch in diesem Fall sind die Primärkupplung PK und die Wandlerüberbrückungskupplung WK in etwa übereinander angeordnet, und werden durch einen gemeinsamen Kolben 8 über eine gemeinsame Ölzuführung 9 betätigt.

Hierbei ist die Pumpe 2 mit dem Innenlamellenträger der Primärkupplung verbunden. Der Außenlamellenträger der Primärkupplung PK ist mit dem Antrieb 6 verbunden. Die Turbine 3 ist mit dem Außenlamellenträger der Wandlerüberbrückungskupplung WK verbunden und der Antrieb 6 ist über eine verschraubte Scheibe 13 mit dem Innenlamellenträger der Wandlerüberbrückungskupplung verbunden.

Die Wirkungsweise der beiden Kupplungen entspricht der Wirkungsweise gemäß Figur 1, da die Wandlerüberbrückungskupplung WK als "Positiv-Kupplung" und die Primärkupplung als "Negativ-Kupplung" ausgeführt ist.

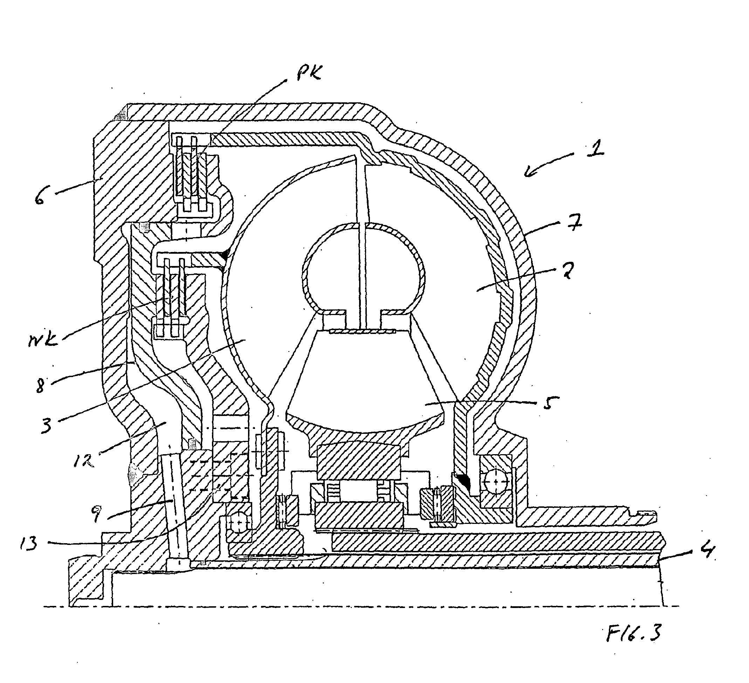

Das in Figur 3 gezeigte Ausführungsbeispiel unterscheidet sich vom Ausführungsbeispiel gemäß Figur 2 dadurch, dass auch die Primärkupplung PK als "Positiv-Kupplung" ausgeführt ist. Die Pumpe 2 ist hierbei mit dem Außenlamellenträger der Primärkupplung verbunden. Der Innenlamellenträger der Primärkupplung PK ist mit dem Antrieb 6 verbunden. Die Turbine 3 ist mit dem Außenlamellenträger der Wandlerüberbrückungskupplung WK verbunden und der Antrieb 6 ist über eine verschraubte Scheibe 13 mit dem Innenlamellenträger der Wandlerüberbrückungskupplung verbunden.

Bei der "positiven" Primärkupplung PK wird durch das Absenken des Druckes im Kolbenraum 12 der Kolben 8 gegen das Lamellenpaket gedrückt, wodurch die Kupplung schließt.

Hierbei wird beim Übergang von Primärkupplung geschlossen auf Wandlerüberbrückungskupplung Schließen die Primärkupplung zuerst geöffnet und dann erst die Wandlerüberbrückungskupplung geschlossen.

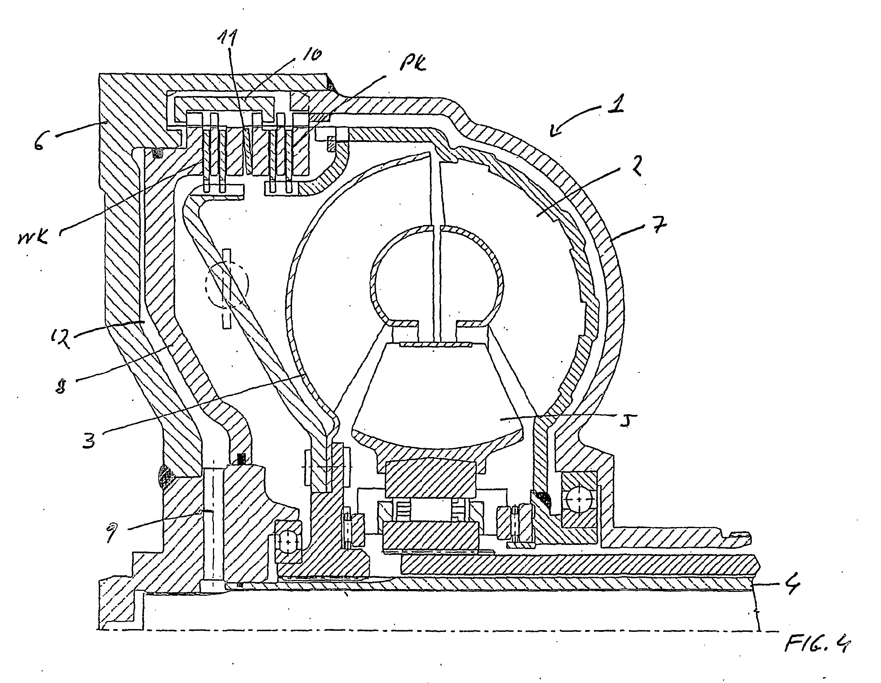

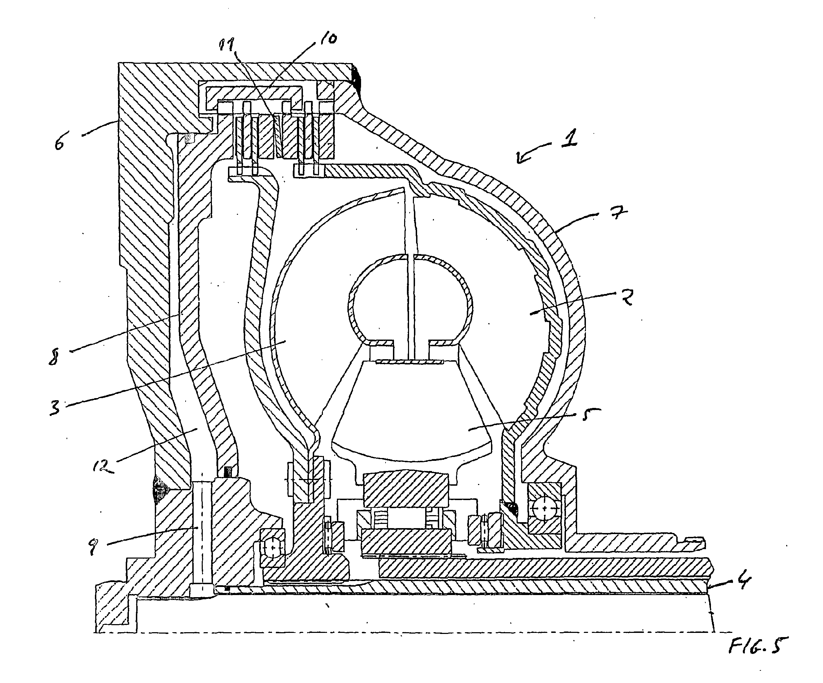

Erfindungsgemäß können die beiden Kupplungen auch im wesentlichen nebeneinander angeordnet sein, wie es bei den Ausführungsbeispielen gemäß den Figuren 4 und 5 der Fall ist.

Gemäß Figur 4 und 5 ist die Pumpe 2 mit dem Innenlamellenträger der Primärkupplung PK verbunden und der Außenlamellenträger der Primärkupplung PK ist über die Wandlerschale mit dem Antrieb 6 verbunden. Die Turbine 3 ist mit dem Innenlamellenträger der Wandlerüberbrückungskupplung WK verbunden und der Antrieb 6 ist über einen Steg 14 mit dem Außenlamellenträger der Wandlerüberbrückungskupplung verbunden. Die beiden Ausführungsformen unterscheiden sich in der Ausführung des Innenlamellenträgers der Wandlerüberbrückungskupplung WK. Des weiteren sind bei der Ausführungsform gemäß Figur 5 die beiden Kupplungen PK und WK nach außen verlegt, wodurch eine geringere Einbaulänge des Wandlers 1 erreicht wird.

Die Wirkungsweise der Kupplungen PK und WK entspricht der Wirkungsweise gemäß Figur 1 und 2, da die Wandlerüberbrückungskupplung WK als "Positiv-Kupplung" und die Primärkupplung als "Negativ-Kupplung" ausgeführt ist.

Zur Ansteuerung der Kupplungen PK und WK ist erfindungsgemäß eine gemeinsame Ventileinheit benötigt, die einen Druck zwischen 0 bar und Systemdruck ausgibt bzw. regelt.

Im Druckbereich 0 bar bis Wandlerdruck wird hiermit die Übertragungsfähigkeit der Primärkupplung gesteuert bzw. geregelt, während im Druckbereich Wandlerdruck bis Systemdruck die Übertragungsfähigkeit der Wandlerüberbrückungskupplung gesteuert bzw. geregelt wird.

Für die Ausführungsformen, bei denen die Primärkupplung PK als "Negativ"-kupplung ausgebildet ist, wird bei Überschreiten es Wandlerdruckes im Kolbenraum 12 die Wandlerüberbrückungskupplung geschlossen, während die Primärkupplung geschlossen bleibt.

Wenn der Druck im Kolbenraum in etwa gleich dem Wandlerdruck ist, dann ist die Wandlerüberbrückungskupplung geöffnet und die Primärkupplung PK geschlossen. Beim Unterschreiten des Wandlerinnendruckes wird der Kolben 8 gegen die Kraft der Feder 11 gedrückt und die Primärkupplung PK öffnet sich.

### Bezugszeichen

- 1: hydrodynamischer Wandler
- 2: Pumpenrad
- 3: Turbine
- 4: Getriebeeingangswelle
- 5: Stator
- 6: Antrieb des Motors
- 7: Wandlerschale
- 8: Kolben
- 9: Ölzuführung
- 10: Steg
- 11: Feder
- 12: Kolbenraum
- 13: Scheibe
- PK: Primärkuplung
- WK: Wandlerüberbrückungskupplung

## Patentansprüche

1. Hydrodynamischer Wandler für den Antriebsstrang eines Kraftfahrzeugs, umfassend eine Pumpe (2), eine Turbine (3), welche mit der Getriebeeingangswelle (4) verbunden ist, einen Stator (5), eine Primärkupplung (PK), welche den Antrieb (6) mit der Pumpe (Pumpenrad) (2) lösbar verbindet und eine Wandlerüberbrückungskupplung (WK), welche den Antrieb (6) mit der Getriebeeingangswelle (4) lösbar verbindet, **dadurch gekennzeichnet, dass** die Primärkupplung (PK) und die Wandlerüberbrückungskupplung (WK) durch einen gemeinsamen Kolben (8) über eine gemeinsame Ölzuführung (9) betätigbar sind.

2. Hydrodynamischer Wandler nach Anspruch 1, **dadurch gekennzeichnet, dass** der gemeinsame Kolben (8) derart angeordnet ist, dass er von der einen Seite von dem Wandlerinnendruck und von der anderen Seite vom im Kolbenraum (12) aufgebauten Druck beaufschlagt wird, so dass in Abhängigkeit von dem Verhältnis Wandlerinnendruck zu Kolbenraumdruck, der Kolben (8) in eine bestimmte Richtung bewegbar ist, wobei in Abhängigkeit von der Richtung jeweils eine Kupplung (PK, WK) betätigbar ist.

3. Hydrodynamischer Wandler nach Anspruch 1 oder 2, **dadurch gekennzeichnet, dass** die Primärkupplung (PK) und die Wandlerüberbrückungskupplung (WK) an derselben Seite des Wandlers angeordnet sind.

4. Hydrodynamischer Wandler nach Anspruch 1, 2 oder 3, **dadurch gekennzeichnet, dass** die Primärkupplung (PK) und die Wandlerüberbrückungskupplung (WK) motorseitig angeordnet sind.

5. Hydrodynamischer Wandler nach Anspruch 1, 2, 3 oder 4, **dadurch gekennzeichnet, dass** die Primärkupplung (PK) und die Wandlerüberbrückungskupplung (WK) in etwa übereinander oder nebeneinander angeordnet sind.

6. Hydrodynamischer Wandler nach einem der vorangehenden Ansprüche, **dadurch gekennzeichnet, dass** die Wandlerüberbrückungskupplung (WK) unter Druckbeaufschlagung schließbar ist und dass die Primärkupplung (PK) mittels der Federkraft einer Feder (11) geschlossen und unter Druckbeaufschlagung öffenbar ist.

7. Hydrodynamischer Wandler nach einem der Ansprüche 1 bis 5, **dadurch gekennzeichnet, dass** die Wandlerüberbrückungskupplung (WK) und die Primärkupplung (PK) unter Druckbeaufschlagung schließbar sind.

8. Hydrodynamischer Wandler nach einem der Ansprüche 1 bis 6, **dadurch gekennzeichnet, dass** die Pumpe (2) mit dem Außenlamellenträger der Primärkupplung (PK) verbunden ist, dass der Innenlamellenträger der Primärkupplung (PK) mit einem mit dem Antrieb (6) verbundenen Steg (10) verbunden ist, dass die Turbine (3) mit dem Innenlamellenträger der Wandlerüberbrückungskupplung (WK) verbunden ist und dass der Antrieb (6) über den Steg (10) mit dem Außenlamellenträger der Wandlerüberbrückungskupplung (WK) verbunden ist.

9. Hydrodynamischer Wandler nach einem der Ansprüche 1 bis 6, **dadurch gekennzeichnet, dass** die Pumpe (2) mit dem Innenlamellenträger der Primärkupplung (PK) verbunden ist, dass der Außenlamellenträger der Primärkupplung (PK) mit dem Antrieb (6) verbunden ist, dass die Turbine (3) mit dem Außenlamellenträger der Wandlerüberbrückungskupplung (WK) verbunden ist und dass der Antrieb (6) über eine verschraubte Scheibe (13) mit dem Innenlamellenträger der Wandlerüberbrückungskupplung (WK) verbunden ist.

10. Hydrodynamischer Wandler nach einem der Ansprüche 1 bis 6, **dadurch gekennzeichnet, dass** die Pumpe (2) mit dem Innenlamellenträger der Primärkupplung (PK) verbunden ist, dass der Außenlamellenträger der Primärkupplung (PK) über die Wandlerschale mit dem Antrieb (6) verbunden ist, dass die Turbine (3) mit dem Innenlamellenträger der Wandlerüberbrückungskupplung (WK) verbunden ist und dass der Antrieb (6) über einen Steg (14) mit dem Außenlamellenträger der Wandlerüberbrückungskupplung (WK) verbunden ist.

11. Hydrodynamischer Wandler nach Anspruch 7, **dadurch gekennzeichnet, dass** die Pumpe (2) mit dem Außenlamellenträger der Primärkupplung (PK) verbunden ist, dass der Innenlamellenträger der Primärkupplung (PK) mit dem Antrieb (6) verbunden ist, dass die Turbine (3) mit dem Außenlamellenträger der Wandlerüberbrückungskupplung (WK) verbunden ist und dass der Antrieb (6) über eine verschraubte Scheibe (13) mit dem Innenlamellenträger der Wandlerüberbrückungskupplung (WK) verbunden ist.

12. Hydrodynamischer Wandler nach einem der vorangehenden Ansprüche, **dadurch gekennzeichnet, dass** zur Ansteuerung der Kupplungen (PK) und (WK) eine gemeinsame Ventileinheit vorgesehen ist, die einen Druck zwischen Null bar und Systemdruck ausgibt bzw. regelt, wobei im Druckbereich Null bar bis Wandlerdruck die Übertragungsfähigkeit der Primärkupplung (PK) steuerbar bzw. regelbar ist, während im Druckbereich Wandlerdruck bis Systemdruck die Übertragungsfähigkeit der Wandlerüberbrückungskupplung (WK) steuerbar bzw. regelbar ist.

13. Verfahren zum Steuern und/oder Regeln der Primärkupplung und der Wandlerüberbrückungskupplung eines hydrodynamischen Wandlers nach einem der Ansprüche 1 bis 12, **dadurch gekennzeichnet, dass** über eine Ventileinheit ein Druck zwischen Null bar und Systemdruck ausgegeben bzw. geregelt wird, wobei im Druckbereich Null bar bis Wandlerdruck die Übertragungsfähigkeit der Primärkupplung gesteuert bzw. geregelt wird, während im Druckbereich Wandlerdruck bis Systemdruck die Übertragungsfähigkeit der Wandlerüberbrückungskupplung gesteuert bzw. geregelt wird.

14. Verfahren nach Anspruch 13, **dadurch gekennzeichnet, dass** für den Fall dass die Primärkupplung (PK) als "Negativ"-Kupplung ausgebildet ist und die Wandlerüberbrückungskupplung (WK) als "Positiv"-Kupplung ausgebildet ist, bei Überschreiten des Wandlerinnendruckes im Kolbenraum (12) die Wandlerüberbrückungskupplung geschlossen wird, während die Primärkupplung geschlossen bleibt, dass beim Unterschreiten des Wandlerinnendruckes der Kolben (8) gegen die Kraft der Feder (11) gedrückt wird und sich die Primärkupplung (PK) öffnet, während die Wandlerüberbrückungskupplung (WK) geöffnet ist, wobei, wenn der Druck im Kolbenraum (12) in etwa gleich dem Wandlerinnendruck ist, die Wandlerüberbrückungskupplung (WK) geöffnet und die Primärkupplung (PK) geschlossen ist.

15. Verfahren nach Anspruch 13, **dadurch gekennzeichnet, dass** für den Fall, dass die Primärkupplung (PK) als "Positiv"-Kupplung ausgebildet ist und die Wandlerüberbrückungskupplung (WK) als "Positiv"-Kupplung ausgebildet ist, bei Überschreiten es Wandlerinnendruckes im Kolbenraum (12) die Wandlerüberbrückungskupplung (WK) geschlossen wird, während die Primärkupplung geöffnet bleibt, dass beim Unterschreiten des Wandlerinnendruckes im Kolbenraum (12) die Primärkupplung schließt während die Wandlerüberbrückungskupplung (WK) offen ist, wobei, wenn der Druck im Kolbenraum (12) in etwa gleich dem Wandlerinnendruck ist, die Wandlerüberbrückungskupplung (WK) und die Primärkupplung (PK) geöffnet sind.

## Claims

1. Hydrodynamic converter for the drive train of a motor vehicle, comprising a pump (2), a turbine (3) connected to the transmission input shaft (4), a stator (5), a primary clutch (PK) which releasably connects the drive (6) to the pump (pump rotor) (2), and a converter bridging clutch (WK) which releasably connects the drive (6) to the transmission input shaft (4), **characterised in that** the primary clutch (PK) and the converter bridging clutch (WK) can be activated by a common piston (8) via a common oil supply (9).

2. Hydrodynamic converter as claimed in claim 1, **characterised in that** the common piston (8) is disposed so that it can be pressurised from one side by the converter internal pressure and from the other side by the pressure built up in the piston chamber (12) so that the piston (8) can be moved in a specific direction depending on the ratio of the converter internal pressure to the piston chamber pressure, and a clutch (PK, WK) can be activated respectively depending on the direction.

3. Hydrodynamic converter as claimed in claim 1 or 2, **characterised in that** the primary clutch (PK) and the converter bridging clutch (WK) are disposed on the same side of the converter.

4. Hydrodynamic converter as claimed in claim 1, 2 or 3, **characterised in that** the primary clutch (PK) and the converter bridging clutch (WK) are disposed on the engine side.

5. Hydrodynamic converter as claimed in claim 1, 2, 3 or 4, **characterised in that** the primary clutch (PK) and the converter bridging clutch (WK) are disposed approximately one above the other or adjacent to one another.

6. Hydrodynamic converter as claimed in one of the preceding claims, **characterised in that** the converter bridging clutch (WK) can be closed by applying pressure to it and the primary clutch (PK) is closed by means of the spring force of a spring (11) and can be opened by applying pressure to it.

7. Hydrodynamic converter as claimed in one of claims 1 to 5, **characterised in that** the converter bridging clutch (WK) and the primary clutch (PK) can be closed by applying pressure to them.

8. Hydrodynamic converter as claimed in one of claims 1 to 6, **characterised in that** the pump (2) is connected to the outer disc carrier of the primary clutch (PK), the inner disc carrier of the primary clutch (PK) is connected to a web (10) connected to the drive (6), the turbine (3) is connected to the inner disc carrier of the converter bridging clutch (WK) and the drive (6) is connected via the web (10) to the outer disc carrier of the converter bridging clutch (WK).

9. Hydrodynamic converter as claimed in one of claims 1 to 6, **characterised in that** the pump (2) is connected to the inner disc carrier of the primary clutch (PK), the outer disc carrier of the primary clutch (PK) is connected to the drive (6), the turbine (3) is connected to the outer disc carrier of the converter bridging clutch (WK) and the drive (6) is connected to the inner disc carrier of the converter bridging clutch (WK) via a screwed-on disc (13).

10. Hydrodynamic converter as claimed in one of claims 1 to 6, **characterised in that** the pump (2) is connected to the inner disc carrier of the primary clutch (PK), the outer disc carrier of the primary clutch (PK) is connected to the drive (6) via the converter shell, the turbine (3) is connected to the inner disc carrier of the converter bridging clutch (WK) and the drive (6) is connected to the outer disc carrier of the converter bridging clutch (WK) via a web (14).

11. Hydrodynamic converter as claimed in claim 7, **characterised in that** the pump (2) is connected to the outer disc carrier of the primary clutch (PK), the inner disc carrier of the primary clutch (PK) is connected to the drive (6), the turbine (3) is connected to the outer disc carrier of the converter bridging clutch (WK) and the drive (6) is connected to the inner disc carrier of the converter bridging clutch (WK) via a screwed-on disc (13).

12. Hydrodynamic converter as claimed in one of the preceding claims, **characterised in that** a common valve unit is provided for activating the clutches (PK) and (WK), which emits or regulates a pressure between zero bar and system pressure, and in the pressure range from zero bar to converter pressure, the transmission capacity of the primary clutch (PK) can be controlled and regulated, whereas in the pressure range from converter pressure to system pressure, the transmission capacity of the converter bridging clutch (WK) can be controlled and regulated.

13. Method of controlling and/or regulating the primary clutch and the converter bridging clutch of a hydrodynamic converter as claimed in one of claims 1 to 12, **characterised in that** a pressure between zero bar and system pressure can be output and regulated via a valve unit, and in the pressure range from zero bar to converter pressure the transmission capacity of the primary clutch is controlled and regulated, whereas in the pressure range from converter pressure to system pressure, the transmission capacity of the converter bridging clutch is controlled and regulated.

14. Method as claimed in claim 13, **characterised in that**, in the situation where the primary clutch (PK) is configured as a "negative" clutch and the converter bridging clutch (WK) is configured as a "positive" clutch, the converter bridging clutch is closed when the converter internal pressure is exceeded in the piston chamber (12), whereas the primary clutch remains closed, and when there is a drop below the converter internal pressure, the piston (8) is pressed against the force of the spring (11) and opens the primary clutch (PK), whilst the converter bridging clutch (WK) is opened, and if the pressure in the piston chamber (12) is approximately the same as the converter internal pressure, the converter bridging clutch (WK) is opened and the primary clutch (PK) is closed.

15. Method as claimed in claim 13, **characterised in that**, in the situation where the primary clutch (PK) is configured as a "positive" clutch and the converter bridging clutch (WK) is configured as a "positive" clutch, when the converter internal pressure is exceeded in the piston chamber (12), the converter bridging clutch (WK) is closed, whereas the primary clutch remains open, and when there is a drop below the converter internal pressure in the piston chamber (12), the primary clutch closes whilst the converter bridging clutch is open, and if the pressure in the piston chamber (12) is more or less the same as the converter internal pressure, the converter bridging clutch (WK) and the primary clutch (PK) are opened.

## Revendications

1. Convertisseur hydrodynamique pour le groupe motopropulseur d'un véhicule automobile, comprenant une pompe (2), une turbine (3) qui est reliée à l'arbre d'entrée (4) de la transmission, un stator (5), un embrayage primaire (PK) qui relie de manière détachable l'entraînement (6) à la pompe (roue de pompe) (2) et un embrayage de pontage de convertisseur (WK) qui relie de manière détachable l'entraînement (6) à l'arbre d'entrée (4) de la transmission, **caractérisé en ce que** l'embrayage primaire (PK) et l'embrayage de pontage de convertisseur (WK) peuvent être actionnés par un piston commun (8) via une alimentation en huile commune (9).

2. Convertisseur hydrodynamique selon la revendication 1, **caractérisé en ce que** le piston commun (8) est disposé de telle manière qu'il est soumis à l'effet d'un côté de la pression interne du convertisseur et de l'autre côté de la pression accumulée dans la chambre de piston (12), de sorte qu'en fonction du rapport entre pression interne du convertisseur et pression dans la chambre de piston, le piston (8) peut être mu dans une direction déterminée, un embrayage (PK, WK) pouvant être chaque fois actionné en fonction de la direction.

3. Convertisseur hydrodynamique selon la revendication 1 ou 2, **caractérisé en ce que** l'embrayage primaire (PK) et l'embrayage de pontage de convertisseur (WK) sont disposés sur le même côté du convertisseur.

4. Convertisseur hydrodynamique selon la revendication 1, 2 ou 3, **caractérisé en ce que** l'embrayage primaire (PK) et l'embrayage de pontage de convertisseur (WK) sont disposés du côté moteur.

5. Convertisseur hydrodynamique selon la revendication 1, 2, 3 ou 4, **caractérisé en ce que** l'embrayage primaire (PK) et l'embrayage de pontage de convertisseur (WK) sont disposés approximativement l'un au-dessus de l'autre ou l'un à côté de l'autre.

6. Convertisseur hydrodynamique selon l'une des revendications précédentes, **caractérisé en ce que** l'embrayage de pontage de convertisseur (WK) peut être fermé sous l'action de la pression et **en ce que** l'embrayage primaire (PK) est fermé par la force d'un ressort (11) et peut être ouvert sous l'action de la pression.

7. Convertisseur hydrodynamique selon l'une des revendications 1 à 5, **caractérisé en ce que** l'embrayage de pontage de convertisseur (WK) et l'embrayage primaire (PK) peuvent être fermés sous l'action de la pression.

8. Convertisseur hydrodynamique selon l'une des revendications 1 à 6, **caractérisé en ce que** la pompe (2) est reliée au support de disque extérieur de l'embrayage primaire (PK), **en ce que** le support de disque intérieur de l'embrayage primaire (PK) est relié à une entretoise (10) reliée à l'entraînement (6), **en ce que** la turbine (3) est reliée au support de disque intérieur de l'embrayage de pontage de convertisseur (WK) et **en ce que** l'entraînement (6) est relié au support de disque extérieur de l'embrayage de pontage de convertisseur (WK) via la entretoise (10).

9. Convertisseur hydrodynamique selon l'une des revendications 1 à 6, **caractérisé en ce que** la pompe (2) est reliée au support de disque intérieur de l'embrayage primaire (PK), **en ce que** le support de disque extérieur de l'embrayage primaire (PK) est relié à l'entraînement (6), **en ce que** la turbine (3) est reliée au support de disque extérieur de l'embrayage de pontage de convertisseur (WK) et **en ce que** l'entraînement (6) est relié au support de disque intérieur de l'embrayage de pontage de convertisseur (WK) via un disque vissé (13).

10. Convertisseur hydrodynamique selon l'une des revendications 1 à 6, **caractérisé en ce que** la pompe (2) est reliée au support de disque intérieur de l'embrayage primaire (PK), **en ce que** le support de disque extérieur de l'embrayage primaire (PK) est relié à l'entraînement (6) via le carter du convertisseur, **en ce que** la turbine (3) est reliée au support de disque intérieur de l'embrayage de pontage de convertisseur (WK) et **en ce que** l'entraînement (6) est relié au support de disque extérieur de l'embrayage de pontage de convertisseur (WK) via une entretoise (14).

11. Convertisseur hydrodynamique selon la revendication 7, **caractérisé en ce que** la pompe (2) est reliée au support de disque extérieur de l'embrayage primaire (PK), **en ce que** le support de disque intérieur de l'embrayage primaire (PK) est relié à l'entraînement (6), **en ce que** la turbine (3) est reliée au support de disque extérieur de l'embrayage de pontage de convertisseur (WK) et **en ce que** l'entraînement (6) est relié au support de disque intérieur de l'embrayage de pontage de convertisseur (WK) via un disque vissé (13).

12. Convertisseur hydrodynamique selon l'une des revendications précédentes, **caractérisé en ce que** pour contrôler les embrayages (PK) et (WK), il est prévu une unité de soupape commune qui fournit ou encore régule une pression entre zéro bar et la pression du système, la capacité de transmission de l'embrayage primaire (PK) pouvant être contrôlée ou encore régulée dans la plage de pression entre zéro bar et la pression du convertisseur, tandis que la capacité de transmission de l'embrayage de pontage de convertisseur (WK) peut être contrôlée ou encore régulée dans la plage de pression entre la pression du convertisseur et la pression du système.

13. Procédé pour contrôler et / ou réguler l'embrayage primaire et l'embrayage de pontage de convertisseur d'un convertisseur hydrodynamique selon l'une des revendications 1 à 12, **caractérisé en ce qu'**une pression comprise entre zéro bar et la pression du système est fournie ou encore régulée par une unité de soupape, la capacité de transmission de l'embrayage primaire étant contrôlée ou encore régulée dans la plage de pression entre zéro bar et la pression du convertisseur, tandis que la capacité de transmission de l'embrayage de pontage de convertisseur est contrôlée ou encore régulée dans la plage de pression entre la pression du convertisseur et la pression du système.

14. Procédé selon la revendication 13, **caractérisé en ce que** dans le cas où l'embrayage primaire (PK) est réalisé comme un embrayage « négatif » et l'embrayage de pontage de convertisseur (WK) est réalisé comme un embrayage « positif », lorsque la pression interne du convertisseur est dépassée dans la chambre de piston, l'embrayage de pontage de convertisseur se ferme, tandis que l'embrayage primaire reste fermé, **en ce que** lorsque la pression chute en dessous de la pression interne du convertisseur, le piston (8) est poussé contre la force du ressort (11) et l'embrayage primaire (PK) s'ouvre, tandis que l'embrayage de pontage de convertisseur est ouvert, et quand la pression dans la chambre de piston (12) est approximativement égale à la pression interne du convertisseur, l'embrayage de pontage de convertisseur (WK) est ouvert et l'embrayage primaire (PK) est fermé.

15. Procédé selon la revendication 13, **caractérisé en ce que** dans le cas où l'embrayage primaire (PK) est réalisé comme un embrayage « positif » et l'embrayage de pontage de convertisseur (WK) est réalisé comme un embrayage « positif », lorsque la pression interne du convertisseur est dépassée dans la chambre de piston (12), l'embrayage de pontage de convertisseur (WK) se ferme, tandis que l'embrayage primaire reste ouvert, **en ce que** lorsque la pression chute en dessous de la pression interne du convertisseur dans la chambre de piston (12), l'embrayage primaire se ferme, tandis que l'embrayage de pontage de convertisseur (WK) est ouvert, et quand la pression dans la chambre de piston (12) est approximativement égale à la pression interne du convertisseur, l'embrayage de pontage de convertisseur (WK) et l'embrayage primaire (PK) sont ouverts.
